# EUROPEAN PATENT APPLICATION

(11) **EP 4 592 371 A1**
(43) Date of publication of application: **30.07.2025**
(21) Application number: 24153727.3
(22) Date of filing: 24.01.2024
(51) Int. Cl.: C09J 7/38, C09J 133/00

(54) **SELF-ADHERING ARTICLES WITH CURED PRESSURE SENSITIVE ADHESIVE**

(71) Applicant: Sika Technology AG, 6340 Baar (CH)
(72) Inventor: GUT, Cyrill, 8820 Wädenswil (CH); HAUFE, Markus, 8048 Zürich (CH); WALLIMANN, Helena, 6055 Alpnach (CH); CARL, Wilfried, 8280 Kreuzlingen (CH)
(74) Representative: Sika Patent Attorneys

(57) **Abstract**

The invention is directed to a self-adhesive article (1) comprising a substrate layer (2) and an adhesive layer (3) of at least partially cured acrylic pressure sensitive adhesive obtained by subjecting a radiation curable adhesive composition to a radiation characterized by a wavelength of 375 - 500 nm, preferably 385 - 475 nm, wherein the radiation curable adhesive composition comprises:
a) At least one acrylic compound A,
b) At least one photoinitiator PI,
c) Optionally at least one synergist S for the photoinitiator PI, and
d) Optionally at least one vinyl compound VC.

## Description

### Technical field

The invention relates to radiation cured acrylic pressure sensitive adhesives and use of them for providing self-adhering articles, particularly self-adhering tapes and membranes.

### Background of the invention

In the field of construction polymeric sheets, which are often referred to as membranes or panels, are used to protect underground and above ground constructions, such as basements, tunnels, or roofs against penetration of water. Waterproofing membranes are applied, for example, to prevent ingress of water through cracks that develop in the concrete structure due to building settlement, load deflection or concrete shrinkage. Roofing membranes are commonly used for waterproofing of flat and low-sloped roof structures. Waterproofing membranes are also used in form of tapes for sealing and waterproofing of construction gaps in building facades, for example gaps between a building structure and window or curtain wall components.

Membranes can be provided with a pre-applied layer of a pressure sensitive adhesive, which is covered with a release liner to prevent premature unwanted adhesion and to protect the adhesive from moisture, fouling, and other environmental factors. At the time of use the release liner is removed and the membrane is secured to the substrate to be waterproofed without the use of additional adhesives. Waterproofing and roofing membranes having a pre-applied adhesive layer covered by release liner are also known as "peel and stick membranes" or "self-adhering membranes". Single- and double-sided adhesive tapes comprising a carrier layer and adhesive layers(s) coated on the surface of the carrier layer, are also used in wide variety of waterproofing applications. The substrate on which the membrane or tape is adhered may be comprised of variety of materials depending on the installation site. The substrate may, for example, be a concrete, fiber concrete, metal, or a plywood substrate, or it may include an insulation board or recover board and/or an existing membrane.

Pressure sensitive adhesives (PSA) are commonly used for providing self-adhering membranes and adhesive tapes. These are viscoelastic materials, which adhere immediately to almost any kind of substrates by application of light pressure and which are permanently tacky. Commonly available pressure sensitive adhesives include, for example, adhesives based on acrylic polymers, styrene block copolymers, amorphous polyolefins (APO), amorphous poly-alpha-olefins (APAO), vinyl ether polymers, bitumen, and rubbers.

Acrylic pressure sensitive adhesives comprising acrylic polymers can be provided as a water-based or solvent-based adhesive, or as a hot-melt adhesive. Water- and solvent based adhesives are applied on a surface as a wet film, which is then dried (cured) by allowing the volatile components (water, organic solvent) to evaporate. Hot-melt adhesives must be heated above the melting point of the adhesive to obtain a melt, which is applied on a surface and allowed to cool and solidify. Acrylic pressure sensitive adhesives can also be provided as monomer mixtures, also known as monomer syrups, which contain acrylic monomers, such as alkyl esters of acrylic acid, as the main monomer component. The monomer mixture can be applied as a film to a carrier followed by chemical curing of the adhesive film through polymerization reactions of the acrylic monomers.

Non-reactive acrylic polymer-based adhesive compositions that are not chemically crosslinked after application of the adhesive to a surface of a substrate have a general disadvantage of exhibiting a relatively poor heat-stability. Compositions containing polymeric constituents can be chemically crosslinked, for example, by using a thermally activated free radical initiator, such as a peroxide, or by radiation in the presence of a photoinitiator or by using electronic beam radiation. UV-curable adhesives, coatings, and inks are commercially available and these typically contain one or more photoinitiators that can be activated with radiation having a wave length in the range of UV light, particularly UV-A, UV-B, and UV-C light corresponding to 315 - 400 nm, 280 - 315 nm, and 100 - 280 nm, respectively. Compositions that are cured with electronic beam radiation do not require the use of photoinitiators.

A general disadvantage related to UV- and electron beam curable systems is that they rely on use of high energy radiation, which requires use of various measures to ensure a safe working environment. Furthermore, use of high energy UV-radiation translates into higher energy use, which has only partially been solved due to the recent advancements in the field of LED-technology. In addition, since the transmission of radiation is decreased by increasing radiation energy, layers having a thickness of more than 0.2 mm are difficult to fully cure by using UV light, particularly UV-C light. UV-A light is more suitable for curing of layers having a thickness of 1 mm or more, but the through cure is still limited and a curing gradient is typically observed.

There thus remains a need for a new type of self-adhesive articles, which can be produced using a method having improved safety and energy efficiency compared to the processes of prior art.

### Summary of the invention

The objective of the present invention is to provide a self-adhesive article and a method for producing the article, which method is able to solve or at least mitigate the problems associated with the methods of prior art.

It was surprisingly found out that these objectives can be achieved with the self-adhesive article of claim 1.

Specifically, according to the invention, a self-adhesive article is provided, the article comprising a substrate layer and an adhesive layer of at least partially cured acrylic pressure sensitive adhesive obtained by subjecting a radiation curable adhesive composition to a radiation characterized by a wavelength of 375 - 500 nm, preferably 385 - 475 nm, wherein the radiation curable adhesive composition comprises:
a) At least one acrylic compound **A,**
b) At least one photoinitiator **PI,**
c) Optionally at least one synergist **S** for the photoinitiator **PI,** and
d) Optionally at least one vinyl compound **VC.**

As it turned out, the suggested self-adhesive article comprises an adhesive layer exhibiting high tackiness and thermal stability. Since the adhesive layer is obtained by curing with low energy radiation, the self-adhesive article can be produced using a process having improved energy efficiency and process safety. Furthermore, the self-adhesive article can be provided with a relatively thick adhesive layer, which is through cured and does not show a curing gradient.

Further aspects of the invention are described below and are subject of the further independent claims. Particularly preferred embodiments are outlined throughout the description and in the dependent claims.

### Brief description of the Drawings

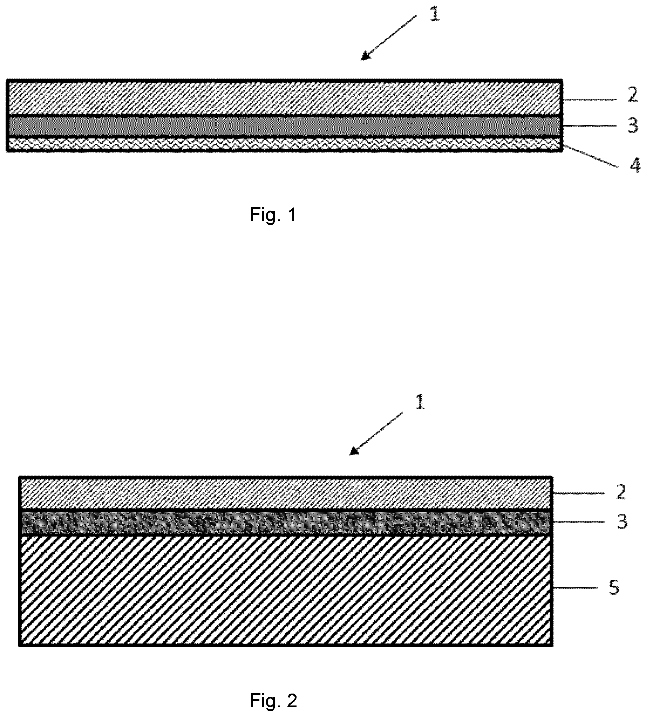

Fig. 1 shows a cross-section of a self-adhesive article (1) comprising a substrate layer (2), an adhesive layer (3) covering the second major surface of the substrate layer (3), and a release liner (4) covering the outer surface of the adhesive layer (3) on the side opposite to the substrate layer (2).
Fig. 2 shows a cross-section of a sealed structure (5) comprising a self-adhesive article (1) comprising a substrate layer (2) and an adhesive layer (3), the substrate layer (2) being adhered to the surface of the structure (5) via the adhesive layer (3).

### Detailed description of the invention

The subject of the present invention is a self-adhesive article (1) comprising a substrate layer (2) and an adhesive layer (3) of at least partially cured acrylic pressure sensitive adhesive obtained by subjecting a radiation curable adhesive composition to a radiation characterized by a wavelength of 375 - 500 nm, preferably 385 - 475 nm, more preferably 400 - 475 nm, even more preferably 420 - 475 nm, most preferably 420 - 470 nm,
wherein the radiation curable adhesive composition comprises:
a) At least one acrylic compound **A,**
b) At least one photoinitiator **PI,**
c) Optionally at least one synergist **S** for the photoinitiator **PI,** and
d) Optionally at least one vinyl compound **VC.**

The prefix "poly" in substance designations such as "polyol" or "polyisocyanate" refers to substances which in formal terms contain two or more per molecule of the functional group that occurs in their designation. A polyol, for example, is a compound having two or more hydroxyl groups, and a polyisocyanate is a compound having two or more isocyanate groups.

The term "polymer" refers to a collective of chemically uniform macromolecules produced by a polyreaction (polymerization, polyaddition, polycondensation) where the macromolecules differ with respect to their degree of polymerization, molecular weight, and chain length. The term also comprises derivatives of said collective of macromolecules resulting from polyreactions, that is, compounds which are obtained by reactions such as, for example, additions or substitutions, of functional groups in predetermined macromolecules and which may be chemically uniform or chemically nonuniform.

The term "copolymer" refers in the present disclosure to a polymer derived from more than one species of monomer ("structural unit"). The polymerization of monomers into copolymers is called copolymerization. Copolymers obtained by copolymerization of two monomer species are known as bipolymers and those obtained from three and four monomer species are called terpolymers and quaterpolymers, respectively.

The term "oligomer" designates a compound built up through the linkage of a few monomers, for example dimers, trimers, tetramers and other polymeric materials. The term "polyisocyanate oligomer" can designate an individual oligomer or a mixture of oligomers of diisocyanates, wherein these oligomers can be built up of like or different diisocyanates.

An amine or an isocyanate is called "aliphatic" when its amine group or its isocyanate group, respectively, is directly bound to an aliphatic, cycloaliphatic or arylaliphatic moiety. The corresponding functional group is therefore called an aliphatic amine or an aliphatic isocyanate group, respectively.

An amine or an isocyanate is called "aromatic" when its amine group or its isocyanate group, respectively, is directly bound to an aromatic moiety. The corresponding functional group is therefore called an aromatic amine or an aromatic isocyanate group, respectively.

The term "molecular weight" refers to the molar mass (g/mol) of a molecule or a part of a molecule, also referred to as "moiety". The term "average molecular weight" can refer to weight or number average molecular weight (Mₙ, M_{w}) of an oligomeric or polymeric mixture of molecules or moieties. The molecular weight can be determined by conventional methods, preferably by gel permeation-chromatography (GPC) using polystyrene as standard, preferably using styrene-divinylbenzene gel with porosity of 100 Angstrom, 1000 Angstrom and 10000 Angstrom as columns, and, depending on the molecule, tetrahydrofurane as a solvent, at 35 °C, or 1,2,4-trichlorobenzene as a solvent, at 160 °C.

The term "melting temperature" refers to a temperature at which a material undergoes transition from the solid to the liquid state. The melting temperature (Tₘ) is preferably determined by differential scanning calorimetry (DSC) according to ISO 11357-3 standard using a heating rate of 2 °C/min. The measurements can be performed with a Mettler Toledo DSC 3+ device and the Tₘ values can be determined from the measured DSC-curve with the help of the DSC-software. In case the measured DSC-curve shows several peak temperatures, the first peak temperature coming from the lower temperature side in the thermogram is taken as the melting temperature (Tₘ).

The term "glass transition temperature" (T_{g}) refers to the temperature above which temperature a polymer component becomes soft and pliable, and below which it becomes hard and glassy. The glass transition temperature is preferably determined by dynamical mechanical analysis (DMA) as the peak of the measured loss modulus (G") curve using an applied frequency of 1 Hz and a strain level of 0.1 %.

The "amount or content of at least one component X" in a composition, for example "the amount of the at least one acrylic compound A" refers to the sum of the individual amounts of all acrylic compounds A contained in the composition. Furthermore, in case the composition comprises 20 wt.-% of at least one acrylic compound A, the sum of the amounts of all acrylic compounds A contained in the composition equals 20 wt.-%.

The term "standard room temperature" designates a temperature of 23 °C.

The adhesive article of the present invention comprises an adhesive layer of an at least partially cured acrylic pressure sensitive adhesive.

The term "layer" refers in the present disclosure generally to a sheet-like element having first and second major surfaces, i.e. top and bottom surfaces, a width defined between longitudinally extending edges, and a thickness defined between the first and second major surfaces. Preferably, a layer has a length and width at least 5 times, preferably at least 15 times, more preferably at least 25 times greater than the thickness of the element.

Furthermore, the term "pressure sensitive adhesive" refers in the present disclosure to viscoelastic materials, which adhere immediately to almost any kind of substrates by application of light pressure and which are permanently tacky. The tackiness of an adhesive layer can be measured, for example, as a loop tack.

In one embodiment, the at least partially cured acrylic pressure sensitive adhesive has a loop tack adhesion to a glass plate measured at a temperature of 23 °C of at least 2.5 N/25 mm, preferably at least 5 N/25 mm, more preferably at least 10 N/25 mm. The loop tack adhesion can be measured using a "FINAT test method no. 9" (FTM 9) as defined in FINAT Technical Handbook, 9th edition, published in 2014.

Preferred thickness and/or coating weight of the adhesive layer depend(s) mainly on the embodiment of the radiation curable adhesive composition and the intended use of the self-adhesive article. For example, a relatively thick adhesive film may be preferred for articles that are adhered to uneven surfaces, such as surfaces of casted concrete bodies. On the other hand, thinner adhesive layers may be preferred for use with substrates having a smooth surface, particularly, to reduce the productions costs of the adhesive article.

Particularly, the adhesive layer may preferably have a thickness of at least 50 µm, especially at least 75 µm, preferably at least 100 µm, more preferably at least 150 µm and/or a coating weight of at least 50 g/m², especially at least 75 g/m², preferably at least 100 g/m², even more preferably at least 150 g/m².

In one embodiment, the adhesive layer has a thickness of 50 - 2500 µm, preferably 100 - 2000 µm, more preferably 150- 1500 µm, even more preferably 250 - 1000 µm and/or a coating weight of 50 - 2500 g/m², preferably 100 - 2000 g/m², more preferably 150 - 1500 g/m², even more preferably 250 - 1000 g/m².

Especially, the adhesive layer may be in form of continuous or discontinuous adhesive layer.

The term "continuous adhesive film" refers in the present disclosure to a layer consisting of one single area coated with an adhesive composition whereas the term "discontinuous adhesive layer" refers to layers consisting of two or more areas coated with an adhesive composition, which areas are not connected to each other to form a continuous layer.

In one embodiment, the radiation curable adhesive composition has a melting point determined by differential scanning calorimetry (DSC) according to ISO 11357-3:2018 standard using a heating rate of 2 °C/min of at or below 45 °C, preferably below 35 °C, preferably at or below 30 °C, more preferably at or below 25 °C.

Furthermore, the radiation curable adhesive composition may have a viscosity at 20 °C measured according to ISO 3219:1994 standard of at least 50 mPa s, preferably at least 100 mPa s, more preferably at least 150 mPa s, even more preferably at least 500 mPa s. The viscosity of the adhesive composition can be determined by using a cone/plate rheometer using a shear rate of 100 1/s, for example, by using Anton Paar Physica MCR rheometer.

In one embodiment, the radiation curable adhesive composition has a viscosity at 20 °C measured according to ISO 3219:1994 standard of 75 - 10000 mPa s, preferably 100 - 8500 mPa s, more preferably 150 - 7500 mPa·s.

The radiation curable adhesive composition contains as a first compulsory component at least one acrylic compound **A.**

The term "acrylic compound" refers to compounds having at least one (meth)acryloyl group in the molecule. The term "(meth)acryloyl" designates methacryloyl or acryloyl. Accordingly, "(meth)acrylic" designates methacrylic or acrylic. A (meth)acryloyl group is also known as (meth)acryl group.

Examples of suitable acrylic compounds **A** include acrylic monomers, such as (meth)acrylates, alkyl(meth)acrylates, di(meth)acrylates, and derivatives thereof, for example, amides and nitriles of (meth)acrylates. The term "monomer" refers in the present disclosure to single, discreet molecule which is capable of combining to form polymers.

Further suitable acrylic compounds **A** include (meth)acryl-functional polymers, such as poly(meth)acrylate, polyurethane, polyether/polyoxyalkylene, and polyester polymers containing one or more (meth)acryl groups. The (meth)acryl groups of an (meth)acryl-functional polymer may be in pendant positions in the polymer chain or in terminal positions.

In one embodiment, the at least one acrylic compound **A** has a weight average molecular weight (M_{w}) of not more than 25000 g/mol, more preferably not more than 15000 g/mol, even more preferably not more than 10000 g/mol.

In one preferred embodiment, the at least one acrylic compound **A** has
- a weight average molecular weight (M_{w}) of 100 - 15000 g/mol, preferably 125 - 10000 g/mol, more preferably 125 - 7500 g/mol, even more preferably 125 - 5000 g/mol and/or
- a viscosity at 20 °C determined according to ISO 3219:1994 standard in the range of 250
- 25000 mPa s, preferably 500-20000 mPa s, more preferably 1000- 15000 mPa s, even more preferably 1500 - 15000 mPa·s.

The acrylic compound **A** can be a monofunctional compound or a polyfunctional compound containing other functional groups than (meth)acryl groups, for example hydroxyl groups, isocyanate groups, or amine groups.

Particularly, the at least one acrylic compound **A** contains exactly one acryl group.

In one embodiment, the radiation curable adhesive composition comprises at least 35 wt.-%, preferably at least 50 wt.-%, more preferably at least 65 wt.-%, even more preferably at least 75 wt.-% of the acrylic compound **A.**

In one embodiment, the acrylic compound **A** comprises at least one acrylic monomer **A1** of formula (I): 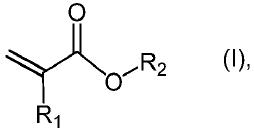 where
R₁ is hydrogen or a hydrocarbyl moiety; and
R₂ is a hydrocarbyl moiety, optionally containing one or more heteroatoms.

The expression "compound X comprises at least one compound X1" is understood to mean in the context of the present invention that the radiation curable adhesive composition comprises one or more compounds of type X1 as representatives of the compound X.

In one embodiment, R₁ is hydrogen or methyl and R₂ is a hydrocarbyl moiety selected from the group consisting of alkyl, cycloalkyl, substituted cycloalkyl, alkenyl, cycloalkenyl, substituted cycloalkenyl, aryl, substituted aryl, aralkyl, alkaryl, allyl, and alkynyl groups, optionally containing one or more heteroatoms, preferably selected from the group consisting of nitrogen, oxygen, boron, silicon, sulfur, and phosphorus atoms.

Examples of suitable acrylic monomers of formula (I) include alkyl (meth)acrylates, for example, methyl acrylate, methyl methacrylate, ethyl acrylate, n-butyl acrylate, n-butyl methacrylate, n-pentyl acrylate, n-hexyl acrylate, n-heptyl acrylate, n-octyl acrylate, n-octyl methacrylate, n-nonyl acrylate, lauryl acrylate, stearyl acrylate, behenyl acrylate, and their branched isomers, for example, isobutyl acrylate, 2-ethylhexyl acrylate, 2-ethylhexyl methacrylate, isooctyl acrylate, isooctyl methacrylate, cyclohexyl methacrylate, isobornyl acrylate, isobornyl methacrylate, and 3,5-dimethyladamantyl acrylate, glycol(meth)acrylate, 2-(2-ethoxyethoxy) ethyl acrylate, 2[2-(2-ethoxyhexyloxy)ethoxy] ethyl acrylate, ethylene glycol di(meth)acrylate, tetraethylene glycol di(meth)acrylate, 2-phenoxyethyl acrylate, 2-phenoxyethyl methacrylate, alkoxylated lauryl acrylate, alkoxylated phenol acrylate, polyethylene glycol (PEG) (meth)acrylates, polypropylene glycol (PPG) (meth)acrylates, methoxy polyethylene glycol (MPEG) (meth)acrylates, and polyethylene glycol polypropylene glycol (PEG/PPG) copolymer or block copolymer (meth)acrylates.

In one embodiment, the at least one acrylic monomer **A1** is selected from ethylhexyl acrylate, butyl acrylate, ethoxyethoxy ethyl acrylate, and isooctyl acrylate.

Acrylic monomers that are known to polymerize to homopolymers having a low glass transition temperature (T_{g}), such as of below 0 °C, particularly below -10 °C, are generally preferred for use as the acrylic monomer **A1.** However, acrylic monomers that are known to yield homopolymers having a high T_{g} can also be used, especially in small amounts, as comonomers, for example, to enhance certain adhesive properties, particularly to reduce cold creep and increase shear resistance of the radiation curable adhesive composition.

Acrylic monomers of formula (I) that are suitable for use as comonomers in relatively small amounts include, for example, isobornyl acrylate, isobornyl methacrylate, 4-acryloylmorpholine, and acrylic acid.

In one further embodiment, the acrylic compound **A1** comprises not more than 50 wt.-%, preferably not more than 35 wt.-%, more preferably not more than 25 wt.-%, even more preferably not more than 15 wt.-%, based on the total weight of the acrylic compound **A1,** of acrylic monomers of formula (I) that polymerize to homopolymers having a T_{g} of at or above 0 °C, preferably at or above -10 °C.

In one embodiment, the acrylic compound **A** further comprises at least one acrylic polymer **A2.**

Particularly, the at least one acrylic polymer **A2** has:
- a glass transition temperature (T_{g}), determined by dynamical mechanical analysis (DMA) as the peak of the measured loss modulus (G") curve using an applied frequency of 1 Hz and a strain level of 0.1 %, of at or below 80 °C, preferably at or below 60 °C, more preferably below at or below 50 °C and/or
- a number average molecular weight (Mₙ) of 20000 - 3000000 g/mol, preferably 30000 - 2500000 g/mol, more preferably 40000 - 2500000 g/mol.

In one embodiment, the acrylic polymer **A2** is selected from poly(2-ethylhexyl acrylate), copolymers of ethylhexyl acrylate and acrylic acid, copolymers of butyl acrylate and methyl methacrylate, copolymers ethylhexyl acrylate of and methyl methacrylate.

In one embodiment the sum of the acrylic monomer **A1** and acrylic polymer **A2** makes up at least 50 wt.-%, preferably at least 65 wt.-%, more preferably at least 75 wt.-% of the total weight of the radiation curable adhesive composition.

In one further embodiment, the weight ratio of the total amount of the acrylic monomer **A1** to the total amount of the acrylic polymer **A2** is in the range of from 15:1 to 1:15, preferably from 15:1 to 5:1, more preferably from 15:1 to 5:2.

In one embodiment, the acrylic compound **A** further comprises at least one acrylic compound **A3.**

Suitable compounds for use the acrylic compound **A3** include acrylic monomers, oligomers, and polymers.

Particularly, the acrylic compound **A3** is a difunctional compound containing one (meth)acryl group and one other functional group, preferably selected from the group consisting of hydroxyl, isocyanate, amine, silane, thiol, and carboxyl groups.

Especially suitable compounds for use as the acrylic compound **A3** include hydroxyethyl (meth)acrylate, hydroxypropyl (meth)acrylate, tert-Butylaminoethyl (meth)methacrylate, HEMA phosphate (2-hydroxyethylmethacrylate acid phosphate), and (meth)acryl-functional silanes, such as 3-Trimethoxysilylpropyl-methacrylate.

The radiation curable adhesive composition comprises as a second compulsory component at least one photoinitiator **PI.**

The term "photoinitiator" refers here to compounds that when exposed to UV or visible radiation create reactive species, for example, free radicals, cations, or anions, which initiate chemical reactions, such as polymerization and/or curing reactions.

Particularly, the at least one photoinitiator **PI** can be activated with irradiation having a wavelength of 375 - 500 nm , preferably 385 - 485 nm, more preferably 385 - 475 nm, even more preferably 400 - 475 nm, still more preferably 420 - 475 nm, most preferably 420 - 470 nm to initiate the curing reactions of the radiation curable adhesive composition.

Due to the presence of a photoinitiator, which can be activated with irradiation having a wavelength falling within the above cited ranges, the radiation curable adhesive composition can be cured by using visible light instead of only UV-radiation.

Suitable compounds for use as the photoinitiator **PI** include, for example, 2,4,6-trimethylbenzoyldiphenylphosphine oxide (TPO), 2,4,6-trimethylbenzoylethoxyphenylphosphine oxide (TPO-L), bis(2,4,6-trimethylbenzoyl)phenylphosphine oxide (BAPO), bis(cyclopentadienyl)bis(2,6-difluoro-3-(1H-pyrro; 1-(2,4-Difluorophenyl)-1H-pyrrole titanium complex, polybutyleneglycol bis(9-oxo-9H-thioxanthenyloxy)acetate (TX) , 2-isopropylthioxanthone (ITX), 1-chloro-4-propoxythioxanthone (CPTX), camphorquinone (CQ) , bis-(2,6-dimethoxybenzoyl)-2,4,4-trimethylpentylphosphine oxide , 2-benzyl-2-(dimethylamino)-4-morpholino-butyrophenone (DBMP), 3 Benzoyl 7 diethylaminocoumarin, and mixtures thereof.

Suitable photoinitiators are commercially available, for example, under the trade names of Omnirad^{®} 819, Omnirad^{®} TPO, Omnirad^{®} TP, Omnirad^{®} ITX, Omnirad^{®} DETX, Esacure^{®} 3644, Omnirad^{®} EMK, Omnirad^{®} 2100, Omnirad^{®} BL 750, Omnipol^{®} TX, and Omnipol^{®} BL 728 (all from IGM Resins).

In one embodiment, the at least one photoinitiator **PI** is a hydrogen abstraction-type of photoinitiator, preferably selected from Norrish type I and type II photoinitiators.

Particularly, the at least one photoinitiator **PI** may be present in the radiation curable adhesive composition in an amount of 0.05 - 10 wt.-%, preferably 0.05 - 5 wt.-%, more preferably 0.1 - 2.5 wt.-%, even more preferably 0.15 - 1.5 wt.-%, based on the total weight of the radiation curable adhesive composition.

In one preferred embodiment, the radiation curable adhesive composition further comprises at least one synergist **S** for the photoinitiator **PI.**

Suitable synergists for use with the photoinitiator **PI** include, particularly, nitrogen containing synergists, preferably having a hydrogen-bearing carbon atom in the alpha position to the nitrogen group.

In one embodiment, the at least one synergist **S** is selected from 2-isopropyl thioxanthone (Genocure ITX), 1,3-propanediol, 2-ethyl-2-(hydroxymethyl)-, polymer with oxirane, 4-(dimethylamino)benzoate (Genopol AB-2), DMAEMA, DEABP, benzoic acid, and 4-(dimethylamino)-, 1,1'-[(methylimino)di-2,1-ethanediyl] ester (Esacure A198).

Particularly, the at least one synergist **S** may be present in the radiation curable adhesive composition in an amount of 0.05 - 10 wt.-%, preferably 0.5 - 7.5 wt.-%, more preferably 1.0 - 7.5 wt.-%, even more preferably 1.0 - 5 wt.-%, based on the total weight of the radiation curable adhesive composition.

In one embodiment, the radiation curable adhesive composition further comprises at least one vinyl compound **VC.**

It goes without saying that the at least one vinyl compound **VC** is different from the at least one acrylic compound **A.**

Suitable vinyl compounds include, for example, ethylenically unsaturated hydrocarbons with functional groups, vinyl esters, vinyl halides, vinylidene halides, nitriles of ethylenically unsaturated hydrocarbons, phosphoric acid esters, and zinc salts of (meth)acrylic acid.

Especially suitable vinyl compounds include the ones comprising at least one polar functional group, preferably at least one carboxyl group and/or hydroxyl group. Vinyl compounds containing polar functional groups, such as acrylic acid, may act as adhesion promoters and/or as physical (non-covalent, ionic) crosslinking agents when present in the radiation curable adhesive composition.

Suitable vinyl compounds with polar functional groups include, for example, acrylic acid, beta-acryloyloxypropionic acid, vinylacetic acid, fumaric acid, crotonic acid, aconitic acid, trichloroacrylic acid, and itaconic acid and hydroxyl group containing acrylic monomers, such as 2-hydroxyethyl(meth)acrylate, 2-hydroxypropyl(meth)acrylate, 3-hydroxypropyl (meth)acrylate, 2-hydroxybutyl(meth)acrylate, 4-hydroxybutyl butyl(meth)acrylate, 2-hydroxy-hexyl(meth)acrylate, 6-hydroxy hexyl(meth) acrylate, 8-hydroxyoctyl(meth)acrylate, 10-hydroxydecyl (meth)acrylate, 12-hydroxylauryl(meth)acrylate, and adducts of hydroxyethyl acrylate with succinic acid anhydride.

Particularly, the at least one vinyl compound **VC** may be present in the radiation curable adhesive composition in an amount of 0 - 30 wt.-%, preferably 1.0 - 25 wt.-%, more preferably 2.5 - 20 wt.-%, even more preferably 2.5 - 10 wt.-%, based on the total weight of the radiation curable adhesive composition.

In one embodiment, the radiation curable adhesive composition further comprises:
e) At least one crosslinking agent **CA,** preferably a polyfunctional acrylic compound containing at least two (meth)acryl groups.

It goes without saying that the at least one crosslinking agent **CA** is different from the at least one acrylic compound **A.**

Particularly, the at least one crosslinking agent **CA** is a polyfunctional acrylic compound containing at least two (meth)acryl groups, preferably having a molecular weight (Mₙ) of not more than 5000 g/mol, more preferably not more than 3500 g/mol, even more preferably not more than 2500 g/mol.

Suitable polyfunctional acrylic compounds for use as the crosslinking agent **CA** include, for example, butanediol dimethacrylate, ethyleneglycol dimethacrylate, diethyleneglycol dimethacrylate, triethyleneglycol dimethacrylate, trimethylolpropane trimethacrylate, butanediol diacrylate, hexanediol diacrylate, trimethylolpropane triacrylate, and tripropyleneglycol diacrylate, trimethylolpropane ethoxy triacrylate, trimethylolpropane triacrylate, tripropylene glycol diacrylate, propylene glycol dimethacrylate, dipropylene glycol diacrylate, dipentaerythritol hydroxy pentaacrylate, neopentyl glycol propoxylate diacrylate, bisphenol A ethoxylate dimethacrylate, alkoxylated hexanediol diacrylate, ethoxylated bisphenol A diacrylate, ethoxylated bisphenol A dimethacrylate, ethoxylated trimethylolpropane triacrylate, propoxylated neopentyl glycol diacrylate, propoxylated glyceryl triacrylate, polybutadiene diacrylate, polybutadiene dimethacrylate, polyethylene glycol (PEG) di(meth)acrylates, polypropylene glycol (PPG) di(meth)acrylates, methoxy polyethylene glycol (MPEG) di(meth)acrylates, and polyethylene glycol polypropylene glycol (PEG/PPG) copolymer or block copolymer di(meth)acrylates, and polyurethane di(meth)acrylates.

In one embodiment, the at least one crosslinking agent **CA** is a difunctional acrylic compound containing exactly two (meth)acryl groups, preferably having a molecular weight of not more than 3500 g/mol, preferably not more than 2500 g/mol, more preferably not more than 1500 g/mol, even more preferably not more than 1000 g/mol.

The crosslinking agent, if used, is preferably present in the radiation curable adhesive composition in an amount of 0.01 - 5 wt.-%, more preferably 0.05 - 3.5 wt.-%, even more preferably 0.1 - 2.5 wt.-%, based on the total weight of the radiation curable adhesive composition.

In one embodiment, the radiation curable adhesive composition further comprises:
f) A reaction product **RP** obtained by polyaddition reaction of at least one compound **P** and at least one hardener **H.**

As used herein, the term "polyaddition reaction" refers to a reaction in which new bonds are formed by undergoing an addition reaction among functional groups of the compound having a functional group and the aforesaid reaction is successively repeated to form a polymer. Consequently, the at least one compound **P** contains first type of functional group(s) that react with second type of functional group(s) contained in the at least one hardener **H** in the polyaddition reaction.

Suitable first type of functional groups includes, for example, isocyanate groups, epoxy groups, (meth)acryl groups, acid anhydride groups, and Michael acceptors. Suitable second type of functional groups include, for example, amine groups, hydroxyl groups, thiol groups, and Michael donors.

The reaction product **RP** comprises all reaction products that are produced in the reactions between the at least one compound **P** and the at least one hardener **H,** including any unconverted reactants. However, if the polyaddition reaction is conducted in the presence of further compounds that are not reacted in the polyaddition reaction, these are not considered to form a part of the reaction product **RP.**

It may be preferred that polyaddition reaction of the compound **P** with the hardener **H** is conducted in a reaction mixture containing at least a portion of the acrylic compound **A,** especially at least a portion of the acrylic monomer **A1,** i.e. that the polyaddition reaction is conducted in the presence of the acrylic compound **A,** especially in the presence of the acrylic monomer **A1.** In this case the at least one compound **P** and/or the at least one hardener **H** are preferably first dissolved in at least a portion of the total amount of the acrylic compound **A,** particularly in at least a portion of the total amount of the acrylic monomer **A1,** which is then present in the reaction mixture as a solvent.

Furthermore, it may be preferred that the at least one vinyl compound **VC,** if used, is not present in the reaction mixture but added to the adhesive composition after the formation of the reaction product **RP.**

The polyaddition reaction is preferably conducted in such a way that the first type of functional groups of the compound **P** in the reaction mixture are not in high stoichiometric excess over the second type of functional groups of the hardener **H,** or vice versa. In case of a substantial stoichiometric excess of the first type of functional groups of the compound **P** or the second type of functional groups of hardener **H,** the reaction product **RP** would contain unreacted compounds with first type of functional groups or unreacted compounds with second type of functional groups, respectively. Reaction products **RP** containing substantial amount of unreacted reactants are generally not preferred since they tend to decrease the viscosity of the radiation curable adhesive composition.

In one embodiment, the polyaddition reaction between the at least one compound **P** and the at least one hardener **H** is conducted at a molar ratio of the first type of functional groups to the second type of functional groups of 0.9 - 1.5, preferably 0.93 - 1.2, more preferably 0.95 - 1.1, even more preferably 0.97 - 1.05. The polyaddition reaction between the at least one compound **P** and at least one hardener **H** may be conducted at a temperature of 10 - 100 °C, preferably 15 - 85 °C, optionally in the presence of a catalyst.

In one embodiment, the reaction product **RP** has:
- a weight average molecular weight (M_{w}) of at least 10000 g/mol, preferably at least 15000 g/mol, more preferably at least 25000 g/mol and/or
- a number average molecular weight (Mₙ) of at least 1000 g/mol, preferably at least 1500 g/mol, more preferably at least 2500 g/mol and/or
- a polydispersity index D of not more than 150, preferably not more than 125.

The average molecular weights M_{w} and Mₙ of the reaction product **RP** are preferably determined by gel permeation-chromatography (GPC) using polystyrene as standard, preferably using styrene-divinylbenzene gel with porosity of 100 Angstrom, 1000 Angstrom and 10000 Angstrom as columns having dimensions of 0.8 x 30 cm, 5 µm, and tetrahydrofurane as a solvent using a flow of 1 mL/min at a temperature of 35 °C.

In one embodiment, the reaction product **RP** has an isocyanate (NCO) content determined according to ISO 11909:2007 standard of not more than 5 wt.-%, preferably not more than 2.5 wt.-%, more preferably not more than 1.5 wt.-%, even more preferably not more than 1 wt.-%, still more preferably not more than 0.5 wt.-%, most preferably not more than 0.15 wt.-%. The term "isocyanate content" as used herein is understood to mean the weight percentage of isocyanate groups to the total weight of the reaction product **RP.**

It may also be preferred that the reaction product **RP** is essentially free of isocyanate groups, i.e., the isocyanate content of the reaction product **RP** determined according to ISO 11909:2007 standard is less than 0.1 wt.-%, preferably less than 0.05 wt.-%, more preferably less than 0.01 wt.-%.

In one embodiment, the at least one compound **P** has a weight average molecular weight (M_{w}) of not more than 30000 g/mol, preferably not more than 25000 g/mol, more preferably not more than 15000 g/mol, even more preferably not more than 13500 g/mol.

In one preferred embodiment, the at least one compound **P** has:
- a weight average molecular weight (M_{w}) in the range of 100 - 30000, preferably 100 - 25000 g/mol, more preferably 100 - 15000 g/mol, even more preferably 150 - 15000 g/mol, still more preferably 200 - 15000 g/mol, most more preferably 200 - 13500 g/mol and/or
- a viscosity at 20 °C determined according to ISO 3219:1994 standard in the range of 250 - 25000 mPa s, preferably 500-20000 mPa s, more preferably 1000- 15000 mPa s, even more preferably 1500 - 15000 mPa s.

In one preferred embodiment, the at least one compound **P** contains isocyanate groups, i.e. the first type of functional groups of the compound **P** are isocyanate groups, and the at least one hardener **H** contains isocyanate-reactive groups, preferably amine and/or hydroxyl groups, i.e. the second type of functional groups of the hardener **H** are isocyanate-reactive groups.

Suitable compounds containing isocyanate groups for use as the compound **P** include, for example, polymers containing isocyanate groups (pre-polymers) and polyisocyanates, such as monomeric diisocyanates and oligomers, polymers, and derivatives of monomeric diisocyanates and mixtures thereof.

In one embodiment, the at least one compound **P** has:
- an average isocyanate-functionality determined according to ISO 14896-2009 standard method A in the range of 1.2 - 2.7, preferably 1.5 - 2.5, more preferably 1.7 - 2.2, even more preferably 1.9 - 2.1 and/or
- an isocyanate content determined according to ISO 11909:2007 standard in the range of 0.1 - 35 wt.-%, preferably 0.3 - 30 wt.-%, more preferably 0.5 - 25 wt.-%, even more preferably 0.7 - 20 wt.-%.

According to one or more embodiments, the compound **P** comprises at least one organic polymer **P1** containing isocyanate groups and/or at least one polyisocyanate **P2.**

The term "organic polymer" encompasses in the present disclosure a collective of macromolecules that are chemically homogeneous but differ in relation to degree of polymerization, molar mass, and chain length, which have a majority of carbon atoms in the polymer backbone, and reaction products of such a collective of macromolecules. The isocyanate groups of the organic polymer **P1** may be in pendant positions in the polymer chain or in terminal positions and are bonded to the organic polymer via a carbon atom. Polymers having a polyorganosiloxane backbone (commonly referred to as "silicones") are not organic polymers in the context of the present disclosure.

Examples of suitable organic polymers **P1** include, for example, polyurethane, polyolefin, polyether, polyester, polycarbonate, polyamide, poly(meth)acrylate, polyurea, polyester-polyurea, polyisocyanurate, and polycarbodiimide polymers containing isocyanate groups.

According to one or more embodiments, the at least one organic polymer **P1** has:
- a weight average molecular weight (M_{w}) in the range of 300 - 30000 g/mol, preferably 300 - 20000 g/mol, preferably 350 - 15000 g/mol, more preferably 450 - 15000 g/mol, even more preferably 500 - 13500 g/mol and/or
- a viscosity at 20 °C determined according to ISO 3219:1994 standard in the range of 250 - 25000 mPa s, preferably 500-20000 mPa s, more preferably 1000- 15000 mPa s, even more preferably 1500 - 15000 mPa·s.

Suitable compounds for use as the polyisocyanate **P2** include, for example, monomeric diisocyanates. A monomeric diisocyanate contains no urethane groups and dimers, trimers, oligomers, and polymerization products or adducts of diisocyanate monomers are not monomeric diisocyanates. Monomeric diisocyanates having a number average molecular weight (Mₙ) of not more than 1000 g/mol, preferably not more than 500 g/mol, more preferably not more than 350 g/mol, are especially suitable for use as the at least one polyisocyanate **P2.**

Suitable monomeric diisocyanates include aromatic and aliphatic monomeric diisocyanates, such as 4,4'-diphenylmethane diisocyanate, optionally with proportions of 2,4'- and / or 2,2'-diphenylmethane diisocyanate (MDI), 2,4-tolylene diisocyanate or mixtures with 2,6-tolylene diisocyanate (TDI), 1,4-phenylene diisocyanate (PDI), naphthalene-1,5-diisocyanate (NDI), 1,6-hexane diisocyanate (HDI), 2,2(4),4-trimethyl-1,6-hexamethylendiisocyanate (TMDI), cyclohexane-1, 3- or -1, 4-diisocyanate, 1-isocyanato-3,3,5-trimethyl-5-isocyanatomethylcyclohexane (isophorone diisocyanate or IPDI), perhydro-2,4'- or -4,4'-diphenylmethandiisocyanate (HMDI), 1,3- or 1,4-bis(isocyanatomethyl) cyclohexane, m- or p-xylylene diisocyanate (XDI), m-tetramethylxylylene diisocyanate (TMXDI ), or mixtures thereof.

Further suitable compounds for use as the at least one polyisocyanate **P2** include oligomers, polymers, and derivatives of monomeric diisocyanates containing isocyanurate, iminooxadiazindione, biuret, allophanate, carbodiimide, uretonimine or oxadiazine-trione groups and having an average isocyanate-functionality determined according to ISO 14896-2009 standard method A in the range of 1.2 - 2.7, preferably 1.5 - 2.5, more preferably 1.7 - 2.2, even more preferably 1.9 - 2.1.

In one embodiment, the at least one organic polymer **P1** is an isocyanate-functional polyurethane polymer.

The term "polyurethane polymer" refers in the present disclosure to polymers prepared by so called diisocyanate polyaddition process. Examples of particularly suitable polyurethane polymers include polyether polyurethanes and polyester polyurethanes. The terms "isocyanate-functional polyurethane polymer" and "polyurethane pre-polymer" can be used interchangeably.

Suitable isocyanate-functional polyurethane polymers are obtained by reacting at least one polyol **PO** with at least one polyisocyanate **PI,** wherein the isocyanate groups (NCO) are used in significant stoichiometric excess to hydroxyl groups (OH). The reaction can be carried out via known methods, with exclusion of moisture at a temperature of 20 - 160 °C, preferably 40 - 140 °C, optionally in the presence of suitable catalysts, with metered addition of the polyisocyanate in such a way that the isocyanate groups thereof are present in the specified stoichiometric excess in relation to the hydroxyl groups of the polyol.

Particularly suitable polyols for use as the polyol **PO** include polyether polyols, polyester polyols, polycarbonate polyols, poly(meth)acrylate polyols, and hydrocarbon polyols, such as polybutadiene polyols, polyhydroxy functional fats and oils, and polyhydroxy functional acrylonitrilie/butadiene copolymers. Preferred polyether polyols **PO** are polyoxypropylene polyols and polyoxypropylene polyoxyethylene polyols, particularly the diols.

Suitable polyisocyanates for use as the polyisocyanate **PI** include, for example, monomeric di- and tri-functional isocyanates, as well as oligomers, polymers, and derivatives of monomeric di-functional isocyanates, and mixtures thereof.

Suitable aromatic di- and tri-functional isocyanates include 2,4- and 2,6-toluylendiisocyanate and mixtures of its isomers (TDI), 4,4`-, 2,4'- and 2,2'-diphenylmethandiisocyanate and mixture of its isomers (MDI), 1,3- and 1,4-phenylendiisocyanate, 2,3,5,6-tetramethylene-1,4-diisocyanatobenzol, naphthaline-1,5-diisocyanate (NDI), 3,3'-dimethyl-4,4'-diisocyanatodiphenyl (TODI), dianisidindiisocyanate (DADI), 1,3,5-tris(isocyanatomethyl)benzol, tris-(4-isocyanatophenyl)methane and tris-(4-isocyanatophenyl)thiophosphat.

Suitable aliphatic di- and tri-functional isocyanates include 1,4-tetramethylendiisocyanat, 2-methylpentamethylene-1,5-diisocyanate, 1,6-hexamethylendiisocyanate (HDI), 2,2,4- and 2,4,4-trimethyl-1,6-hexa-methylendiisocyanate (TMDI), 1,10-decamethylendiisocyanate, 1,12-dodecane-thylendiisocyanat, lysin- and lysinesterdiisocyanate, cyclohexane-1,3- and -1,4-diisocyanate, 1-methyl-2,4- and -2,6-diisocyanatocyclohexane and mixtures of its isomers (HTDI or H6TDI), 1-isocyanato-3,3,5-trimethyl-5-iso-cyanatomethyl-cyclohexane (=isophorondiisocyanate or IPDI), perhydro-2,4'- and -4,4`-diphenylmethandiisocyanate (HMDI or H12MDI), 1,4-diisocyanato-2,2,6-trimethylcyclohexane (TMCDI), 1,3- and 1,4-Bis-(isocyanatomethyl)cyclo-hexane, m- and p-xylylendiisocyanate (m- and p-XDI), m- and p-tetramethyle-1,3- and -1,4-xylylendiisocyanate (m- and p-TMXDI), bis-(1-isocyanato-1-methyl-ethyl)naphthaline, dimer- and trimer fatty acid isocyanate such as 3,6-bis-(9-isocya-natononyl)-4,5-di-(1-heptenyl)cyclohexen (dimeryldiisocyanat) and α, α, α ', α ', α ", α "-hexamethyl-1,3,5-mesitylentriisocyanate.

Especially suitable oligomers, polymers, and derivatives of monomeric polyisocyanates include those based on MDI, TDI, HDI, and IPDI. Commercially available versions of these include, for example, HDI-Biurete such as Desmodur^{®} N 100 and N 3200 (from Covestro), Tolonate^{®} HDB and HDB-LV (from VencoreX) and Duranate^{®} 24A-100 (from Asahi Kasei); HDI-Isocyanurate, such as Desmodur^{®} N 3300, ultra N 3300, N 3600, ultra N 3600 and N 3790 BA (all from Covestro), Tolonate^{®} HDT, HDT-LV and HDT-LV2 (from VencoreX), Duranate^{®} TPA-100 and THA-100 (from Asahi Kasei) and Coronate^{®} HX (from Nippon Polyurethane); HDI-Uretdione such as Desmodur^{®} N 3400 (from Covestro); HDI-Iminooxadiazindione such as Desmodur^{®} XP 2410 (from Covestro); HDI-Allophanate such as Desmodur^{®} VP LS 2102 (from Covestro); IPDI-Isocyanurate, for example as a solution such as Desmodur^{®} Z 4470 (from Covestro) or in solid form such as Vestanat^{®} T1890/ 100 (from Evonik Degussa); TDI-Oligomers such as Desmodur^{®} IL (from Covestro); as well as mixtures of isocyanurates based on TDI/HDI, for example Desmodur^{®} HL (from Covestro). Furthermore suitable are at standard room temperature liquid forms of MDI ("modified MDI"), which are mixtures of MDI with MDI derivatives, such as MDI-carbodiimides or MDI-uretonimines or MDI-urethanes that are commercially available under the trade names of Desmodur^{®} CD, Desmodur^{®} PF, Desmodur^{®} PC (all from Covestro) or Isonate^{®} M 143 (from Dow Chemicals), as well as mixtures of MDI and MDI-homologues (polymers of MDI or PMDI), which are commercially available under the trade name of Desmodur^{®} VL, Desmodur^{®} VL50, Desmodur^{®} VL R10, Desmodur^{®} VL R20, Desmodur^{®} VH 20 N and Desmodur^{®} VKS 20F (all from Covestro), Isonate^{®} M 309, Voranate^{®} M 229 and Voranate^{®} M 580 (all from Dow Chemicals) or Lupranat^{®} M 10 R (from BASF). The oligomeric polyisocyanates discussed above are typically mixtures of substances having different degrees of oligomerization/polymerization and/or chemical structures and have an average isocyanate functionality in the range of 2.1 - 4.0.

According to one or more embodiments, the organic polymer **P1** comprises at least one isocyanate-functional aliphatic polyurethane polymer **P11,** preferably obtained by reacting the at least one polyol **PO** with at least one aliphatic monomeric polyisocyanate **ALPI.** Suitable aliphatic monomeric polyisocyanates include the aliphatic di- and tri-functional isocyanates as discussed above.

Isocyanate-functional aliphatic polyurethane polymers may be preferred over aromatic ones since the latter have in some cases been found out to form a gelled polymer structure in polyaddition reactions with the hardener **H,** particularly with hardeners **H** containing amine groups. Adhesive compositions having a gelled polymer structure are heterogeneous mixtures, which cannot be coated on a surface to form a homogeneous adhesive film having a constant thickness. However, it has also been found out that the tendency of the isocyanate-functional aromatic polyurethane polymers to form a gelled polymer structure in reactions with the hardener **H** may significantly be reduced by using them in mixtures with isocyanate-functional aliphatic polyurethane polymers.

In one embodiment, the organic polymer **P1** comprises the at least one isocyanate-functional aliphatic polyurethane polymer **P11** and at least one isocyanate-functional aromatic polyurethane polymer **P12,** preferably obtained by reacting the at least one polyol **PO** with at least one aromatic monomeric polyisocyanate **ARPI.** Suitable aromatic monomeric polyisocyanates include the aromatic di- and tri-functional isocyanates as discussed above. According to one or more embodiments, the weight ratio of the total amount of the isocyanate-functional aliphatic polyurethane polymer **P11** to the total amount of the isocyanate-functional aromatic polyurethane polymer **P12** is from 10:1 to 1:2, preferably from 6:1 to 1:1, more preferably from 5:1 to 1:1, even more preferably from 5:1 to 2:1.

In one embodiment, the compound **P** further comprises at least one isocyanate-functional acrylic ester resin **P3,** preferably an aliphatic isocyanate-functional acrylic ester resin. Bifunctional reactants such as the resin **P3** may be used to add acrylate functionality to the reaction product **RP,** which enables covalent linking of the in-situ formed high molecular weight polymers to the polyacrylate network formed during the final curing reaction of the radiation curable adhesive composition. This may improve the cohesion, reduce the cold creep, and improve the heat resistance of the adhesive composition.

In one embodiment, the at least one isocyanate-functional acrylic ester resin **P3** has:
- an average isocyanate-functionality determined according to ISO 14896-2009 standard method A in the range of 1.2 - 2.7, preferably 1.5 - 2.5, more preferably 1.7 - 2.2, even more preferably 1.9 - 2.1 and/or
- an isocyanate (NCO) content determined according to ISO 11909:2007 standard in the range of 5 - 25 %, preferably 10 - 20 %.

Suitable isocyanate-functional acrylic ester resins can be obtained, for example, by reacting monohydric alcohols containing one or more (meth)acryloyl group(s) with suitable polyisocyanates, preferably diisocyanates.

In one embodiment, the at least one hardener **H** has a molecular weight of not more than 7500 g/mol, more preferably not more than 5000 g/mol, even more preferably not more than 3500 g/mol, still more preferably not more than 2500 g/mol, most preferably not more than 1500 g/mol.

In one preferred embodiment, the at least one hardener **H** contains exactly two second type of functional groups, preferably isocyanate-reactive groups, especially selected from amine groups, hydroxyl groups, and thiol groups, particularly from amine groups and hydroxyl groups.

In one further embodiment, the at least one hardener **H** is a di-functional compound containing exactly two second type of functional groups, preferably isocyanate-reactive groups, especially selected from amine groups, hydroxyl groups, and thiol groups, particularly from amine groups and hydroxyl groups.

In one embodiment, the hardener **H** comprises at least one diamine **H1** and/or at least one diol **H2.**

The diamine **H1** is preferably an aliphatic diamine, particularly having molecular weight of not more than 7500 g/mol, more preferably not more than 5000 g/mol, even more preferably not more than 3500 g/mol, still more preferably not more than 2500 g/mol.

Suitable aliphatic diamines for use as the diamine **H1** include, for example, the following commercially available amines:
- aliphatic, cycloaliphatic or arylaliphatic primary diamines, such as ethylenediamine, 1,2-propanediamine, 1,3-propanediamine, 2-methyl-1,2-propanediamine, 2,2-dimethyl-1,3-propanediamine, 1,3-butanediamine, 1,4-butanediamine, 1,3-pentanediamine (DAMP), 1,5-pentanediamine, 1,5-diamino-2-methylpentane (MPMD), 2-butyl-2-ethyl-1,5-pentanediamine (C11-neodiamine), 1,6-hexanediamine, 2,5-dimethyl-1,6-hexanediamine, 2,2,4- and 2,4,4-trimethylhexamethylenediamine (TMD), 1,7-heptanediamine, 1,8-octanediamine, 1,9-nonanediamine, 1,10-decanediamine, 1,11-undecanediamine, 1,12-dodecanediamine, 1,2-, 1,3- and 1,4-diaminocyclohexane, 1,4-diamino-2,2,6-trimethylcyclohexane (TMCDA), bis-(4-aminocyclohexyl)-methane (H12-MDA), bis-(4-amino-3-methylcyclohexyl)-methane, bis-(4-amino-3-ethylcyclohexyl)-methane, bis-(4-amino-3,5-dimethylcyclohexyl)-methane, bis-(4-amino-3-ethyl-5-methylcyclohexyl)-methane (M-MECA), 1-amino-3-aminomethyl-3,5,5-trimethylcyclohexane (= isophoronediamine or IPDA), 2- and 4-methyl-1,3-diaminocyclohexane and mixtures thereof, 1,3- and 1,4-bis-(aminomethyl)cyclohexane, 2,5-bis-(aminomethyl)-bicyclo[2.2.1]heptane (NBDA), 3,8-bis-(aminomethyl)-tricyclo[5.2.1.02,6]decane, 1,8-menthanediamine and 1,3- and 1,4-bis-(aminomethyl)benzene;
- ether group-containing aliphatic primary diamines, such as in particular bis-(2-aminoethyl) ether, 3,6-dioxaoctane-1,8-diamine, 4,7-dioxadecane-1,10-diamine, 4,7-dioxadecane-2,9-diamine, 4,9-dioxadodecane-1,12-diamine, 5,8-dioxadodecane-3,10-diamine, 4,7,10-trioxatridecane-1,13-diamine and higher oligomers of these diamines, 3,9-bis-(3-aminopropyl)-2,4,8,10-tetraoxaspiro[5.5]undecane, bis-(3-aminopropyl)polytetrahydrofuran and other polytetrahydrofuran diamines, Jeffamine^{®} RFD-270 (from Huntsman), as well as polyoxyalkylene diamines ("polyether-diamines"). The latter are products from the amination of polyoxyalkylene diols and are available, for example, under the name of Jeffamine^{®} (from Huntsman), under the name of Polyetheramine (from BASF) or under the name of PC Amine^{®} (from Nitroil). Especially suitable polyoxyalkylene diamines are Jeffamine^{®} D-205, Jeffamine^{®} D-230, Jeffamine^{®} D-400, Polyetheramine D 230, Polyetheramine D 400, PC Amine^{®} DA 250 and PC Amine^{®} DA 400.

In one embodiment, the at least one diol **H2** has a molecular weight of not more than 7500 g/mol, more preferably not more than 5000 g/mol, even more preferably not more than 3500 g/mol, still more preferably not more than 2500 g/mol.

Suitable diols for use as the diol **H2** include, for example, ethylene glycol, 1,2- and 1,3-propanediol, 2,2-dimethyl-1,3-propanediol, 1,4-butanediol, 1,6-hexanediol, 2,2,4-trimethyl-1,6-hexanediol, 2,4,4-trimethyl-1,6-hexanediol, 1,7-heptanediol, 1,12-dodecanediol, 9,10-octadecene-1,12-diol, thiodiglycol, 1,18-octadecanediol, 2,4-dimethyl-2-propyl-1,3-heptanediol, 1,4-butanediol, 1,4-butanediol, diethylene glycol, triethylene glycol, and tetraethylene glycol.

Hardeners with amine groups are generally preferred for use in the polyaddition reaction over ones with hydroxyl groups since reaction products **RP** containing urea linkages instead of urethane linkages have been found out to enable an especially strong thickening effect in the radiation curably adhesive composition. Without wishing to be bound to any theory, it is believed that the viscosity increasing effect results from the inter- and intramolecular interactions of the urea moieties formed in isocyanate-amine reactions. The effect is significantly less pronounced if hardeners with hydroxyl groups are used since the reaction product **RP** then contains urethane instead of urea moieties.

In one embodiment, the at least one diamine **H1** is an aliphatic polyoxyalkylene diamine, preferably having a molecular weight in the range of 100 - 3500 g/mol, more preferably 150 - 2500 g/mol, even more preferably 200 - 1500 g/mol.

In one embodiment, the radiation curable adhesive composition further comprises:
g) At least one tackifying resin **TR.**

The term "tackifying resin" designates in the present disclosure resins that in general enhance the adhesion and/or tackiness of an adhesive composition. The term "tackiness" designates in the present disclosure the property of a substance of being sticky or adhesive by simple contact. The tackiness can be measured, for example, as a loop tack. Preferred tackifying resins are tackifying at standard room temperature.

Examples of suitable tackifying resins to be used in the adhesive composition include natural resins, synthetic resins and chemically modified natural resins.

Examples of suitable natural resins and chemically modified natural resins include rosins, rosin esters, phenolic modified rosin esters, and terpene resins. The term "rosin" is to be understood to include gum rosin, wood rosin, tall oil rosin, distilled rosin, and modified rosins, for example dimerized, hydrogenated, maleated and/or polymerized versions of any of these rosins.

Suitable commercially available rosin ester resins include, for example, Sylvatac^{®} RAZ 100S, Sylvatac^{®} RE 85, Sylvatac^{®} RE 95, Sylvatac^{®} RE 98, Sylvatac^{®} RE 101RM, and Sylvatac^{®} RE 103S (all from Kraton); and Sylvalite^{®} RE 80HP, Sylvalite^{®} RE 85GB, Sylvalite^{®} RE 88F, Sylvalite^{®} RE 100F, Sylvalite^{®} RE 100L, Sylvalite^{®} RE 100S, Sylvalite^{®} RE 105L, Sylvalite^{®} RE 105 XL, Sylvalite^{®}, Sylvalite^{®} RE 110L, and Sylvalite^{®} RE 115, and Sylvares^{®} 1115 (all from Kraton).

Suitable terpene resins include copolymers and terpolymers of natural terpenes, such as styrene/terpene and alpha methyl styrene/terpene resins; polyterpene resins generally resulting from the polymerization of terpene hydrocarbons, such as the bicyclic monoterpene known as pinene, in the presence of Friedel-Crafts catalysts at moderately low temperatures; hydrogenated polyterpene resins; and phenolic modified terpene resins including hydrogenated derivatives thereof.

Suitable commercially available terpene resins include, for example, Sylvares^{®} TP 96, Sylvares^{®} TP 115P, Sylvares^{®} TP 300, Sylvares^{®} TP 2019, Sylvares^{®} TP 2040, Sylvares^{®} TP 2040HM, Sylvares^{®} TR 7115, Sylvares^{®} TR 7125, Sylvares^{®} TR B115, Sylvares^{®} TR M1115, and Sylvares^{®} ZT 106LT (all from Kraton).

The term "synthetic resin" refers to compounds obtained from the controlled chemical reactions such as polyaddition or polycondensation between well-defined reactants that do not themselves have the characteristic of resins.

Monomers that may be polymerized to synthesize the synthetic resins may include aliphatic monomer, cycloaliphatic monomer, aromatic monomer, or mixtures thereof. Aliphatic monomers can include C₄, C₅, and C₆ paraffins, olefins, and conjugated diolefins. Examples of aliphatic monomer or cycloaliphatic monomer include butadiene, isobutylene, 1,3-pentadiene, 1,4-pentadiene, cyclopentane, 1-pentene, 2-pentene, 2- methyl-1-pentene, 2-methyl-2-butene, 2-methyl-2-pentene, isoprene, cyclohexane, 1,3-hexadiene, 1-4-hexadiene, cyclopentadiene, dicyclopentadiene, and terpenes. Aromatic monomer can include C₈, C₉, and C₁₀ aromatic monomer. Examples of aromatic monomer include styrene, indene, derivatives of styrene, derivatives of indene, coumarone and combinations thereof.

Suitable synthetic resins include synthetic hydrocarbon resins made by polymerizing mixtures of unsaturated monomers that are obtained as by-products of cracking of natural gas liquids, gas oil, or petroleum naphthas. Synthetic hydrocarbon resins obtained from petroleum-based feedstocks are referred in the present disclosure as "hydrocarbon resins" or "petroleum hydrocarbon resins". These include also pure monomer aromatic resins, which are made by polymerizing aromatic monomer feedstocks that have been purified to eliminate color causing contaminants and to precisely control the composition of the product. Hydrocarbon resins typically have a relatively low average molecular weight (Mₙ), such in the range of 250 - 5000 g/mol and a glass transition temperature, determined by dynamical mechanical analysis (DMA) as the peak of the measured loss modulus (G") curve using an applied frequency of 1 Hz and a strain level of 0.1 %, of above 0 °C, preferably equal to or higher than 15 °C, more preferably equal to or higher than 30 °C.

Examples of suitable hydrocarbon resins include C5 aliphatic hydrocarbon resins, mixed C5/C9 aliphatic/aromatic hydrocarbon resins, aromatic modified C5 aliphatic hydrocarbon resins, cycloaliphatic hydrocarbon resins, mixed C5 aliphatic/cycloaliphatic hydrocarbon resins, mixed C9 aromatic/cycloaliphatic hydrocarbon resins, mixed C5 aliphatic/cycloaliphatic/C9 aromatic hydrocarbon resins, aromatic modified cycloaliphatic hydrocarbon resins, C9 aromatic hydrocarbon resins, polyterpene resins, and copolymers and terpolymers of natural terpenes as well hydrogenated versions of the aforementioned hydrocarbon resins. The notations "C5" and "C9" indicate that the monomers from which the resins are made are predominantly hydrocarbons having 4-6 and 8-10 carbon atoms, respectively. The term "hydrogenated" includes fully, substantially and at least partially hydrogenated resins. Partially hydrogenated resins may have a hydrogenation level, for example, of 50 %, 70 %, or 90 %.

Suitable hydrocarbon resins are commercially available, for example, under the trade name of Wingtack^{®} series, Wingtack^{®} Plus, Wingtack^{®} Extra, and Wingtack^{®} STS (all from Cray Valley); under the trade name of Escorez^{®} 1000 series, Escorez^{®} 2000 series, and Escorez^{®} 5000 series (all from Exxon Mobile Chemical); under the trade name of Novares^{®} T series, Novares^{®} TT series, Novares^{®} TD series, Novares^{®} TL series, Novares^{®} TN series, Novares^{®} TK series, and Novares^{®} TV series (all from Rain Carbon Inc); and under the trade name of Kristalex^{®}, Plastolyn^{®}, Piccotex^{®}, Piccolastic^{®} and Endex^{®} (all from Eastman Chemicals).

In one embodiment, the at least one tackifying resin **TR** is selected from the group consisting of rosins, rosin ester resins, phenolic modified rosin ester resins, and terpene resins.

In one embodiment, the at least one tackifying resin **TR** is present in the radiation curable adhesive composition in an amount of 0.5 - 35 wt.-%, preferably 1.5 - 30 wt.%, more preferably 5-25 wt.-% of the total weight of the radiation curable adhesive composition.

The radiation curable adhesive composition may further comprise one or more additional constituents including, for example, waxes and plasticizers as well as one or more additives such as, for example, flame retardants, wetting agents, optical brighteners, pigments, dyes, and desiccants. Preferably, the amount of such additional constituents and additives is not more than 15 wt.-%, more preferably not more than 10 wt.-%, even more preferably not more than 5 wt.-%, based on the total weight of the adhesive composition.

Particularly, the radiation curable adhesive composition is a one-part adhesive composition. The term "one-part adhesive composition" refers here to an adhesive composition, which can be stored in a single container, preferably a moisture-tight container, and which composition exhibits a certain storage stability. The term "storage stability" refers to the ability of a composition to be stored at room temperature in a suitable container under exclusion of moisture and UV radiation for a certain time interval, particularly several months, without undergoing significant changes in application or end-use properties.

The self-adhesive article of the present invention further comprises, in addition to the adhesive layer, a substrate layer.

The substrate layer and the adhesive layer may be directly or indirectly connected to each other over at least a portion of their opposing surfaces.

The expression "directly connected" is understood to mean in the context of the present disclosure that no further layer or substance is present between the two layers and that the opposing surfaces of the two layers are directly bonded to each other or adhere to each other. The expression "indirectly connected" is understood to mean that the layers are connected to each other via a connecting layer, such a layer of porous material, for example a layer of fiber material.

In one embodiment, the substrate layer is a polymeric layer. The term "polymeric layer" refers in the present disclosure to a layer comprising a continuous phase composed of one or more polymers.

In one embodiment, the polymeric layer comprises at least one polymer selected from the group consisting of polyolefins, halogenated polyolefins, polyvinylchloride (PVC), rubbers, and ketone ethylene esters (KEE).

The term "polyolefin" refers in the present disclosure to homopolymers and copolymers obtained by polymerization of olefin monomers optionally with other types of comonomers.

According to one or more embodiments, the at least one polymer is selected from polyethylene (PE), ethylene copolymers, polypropylene (PP), propylene copolymers, ethylene-vinyl acetate copolymer (EVA), ethylene- acrylic ester copolymers, polyvinylchloride (PVC), polyethylene terephthalate (PET), polyamide (PA), polystyrene (PS), polyamides (PA), chlorosulfonated polyethylene (CSPE), polyisobutylene (PIB), ethylene propylene diene monomer (EPDM), butyl rubber, halogenated butyl rubber, natural rubber, chloroprene rubber, synthetic 1,4-cis-polyisoprene, polybutadiene, ethylene-propylene rubber (EPR), styrene-butadiene rubber (SBR), isoprene-butadiene copolymer, styrene-isoprene-butadiene rubber, methyl methacrylate-butadiene copolymer, methyl methacrylate-isoprene copolymer, acrylonitrile-isoprene copolymer, and acrylonitrile-butadiene copolymer.

In one embodiment, the at least one polymer is selected from polyethylene (PE), ethylene copolymers, polypropylene (PP), propylene copolymers, ethylene-vinyl acetate copolymer (EVA), ketone ethylene esters (KEE), polyvinylchloride (PVC), and ethylene propylene diene monomer (EPDM).

Suitable polyethylenes (PE) for use as the at least one polymer includes low density polyethylene (LDPE), linear low density polyethylene (LLDPE), and high density polyethylene (HDPE), preferably having a melting temperature (Tₘ) determined by differential scanning calorimetry (DSC) according to ISO 11357-3:2018 standard using a heating rate of 2 °C/min of at or above 75 °C, preferably at or above 85 °C, more preferably at or above 95 °C.

Suitable polypropylenes for use as the at least one polymer include, for example, isotactic polypropylene (iPP), syndiotactic polypropylene (sPP), and homopolymer polypropylene (hPP), preferably having a melting temperature (Tₘ) determined by differential scanning calorimetry (DSC) according to ISO 11357-3:2018 standard using a heating rate of 2 °C/min of at or above 100 °C, preferably at or above 105 °C, more preferably at or above 110 °C.

In one embodiment, the self-adhesive article is an adhesive tape or a self-adhesive waterproofing membrane, roofing membrane, gas barrier membrane, VOC barrier membrane, a façade membrane, a geomembrane, or a roof underlayment.

In one embodiment, the self-adhesive article is a single-sided or double-sided self-adhering tape, wherein the polymeric layer preferably has a width of not more than 1.5 m, more preferably not more than 1 m, even more preferably not more than 0.75 m, particularly of 0.05 - 1.5 m, preferably 0.1 - 1 m, more preferably 0.15 - 0.75 m and/or wherein the polymeric layer preferably has a thickness of not more than 1.5 mm, more preferably not more than 1 mm, even more preferably not more than 0.75 mm, particularly of 0.05 - 1.5 mm, preferably 0.1 - 1 mm, more preferably 0.15 - 0.75 mm.

In one embodiment, the self-adhering article is a roof repair tape, a joint sealing tape, a connecting tape, a fixation tape, a detailing tape, or a sandwich tape.

In one further embodiment, the self-adhesive article is a roofing membrane, wherein the polymeric layer preferably has a width of at least 0.5 m, more preferably at least 0.75 m, even more preferably at least 1 m, particularly of 0.75 - 5 m, preferably 1 - 3.5 m, more preferably 1 - 2.5 m and/or wherein the polymeric layer preferably has a thickness of at least 0.5 mm, more preferably at least 0.75 mm, even more preferably at least 1 mm, particularly of 0.5 - 5 mm, preferably 0.75 - 3.5 mm, more preferably 1 - 3 mm.

In one embodiment, the polymeric layer of the roofing membrane comprises the least one polymer selected from polypropylene (PP), propylene copolymers, polyvinylchloride (PVC), and ethylene propylene diene monomer (EPDM).

Particularly suitable propylene copolymers for use as the at least one polymer in the polymeric layer of the roofing membrane include heterophasic propylene copolymers.

These are heterophasic polymer systems comprising a high crystallinity base polyolefin and a low-crystallinity or amorphous polyolefin modifier. The heterophasic phase morphology consists of a matrix phase composed primarily of the base polyolefin and a dispersed phase composed primarily of the polyolefin modifier. Suitable commercially available heterophasic propylene copolymers include reactor blends of the base polyolefin and the polyolefin modifier, also known as "in-situ TPOs" or "reactor TPOs or "impact copolymers (ICP)", which are typically produced in a sequential polymerization process, wherein the components of the matrix phase are produced in a first reactor and transferred to a second reactor, where the components of the dispersed phase are produced and incorporated as domains in the matrix phase. Heterophasic propylene copolymers comprising polypropylene homopolymer as the base polymer are often referred to as "heterophasic propylene copolymers (HECO)" whereas heterophasic propylene copolymers comprising polypropylene random copolymer as the base polymer are often referred to as "heterophasic propylene random copolymers (RAHECO)". The term "heterophasic propylene copolymer" encompasses in the present disclosure both the HECO and RAHECO types of the heterophasic propylene copolymers.

Depending on the amount of the polyolefin modifier, the commercially available heterophasic propylene copolymers are typically characterized as "impact copolymers" (ICP) or as "reactor-TPOs" or as "soft-TPOs". The main difference between these types of heterophasic propylene copolymers is that the amount of the polyolefin modifier is typically lower in ICPs than in reactor-TPOs and soft-TPOs, such as not more than 40 wt.-%, particularly not more than 35 wt.-%. Consequently, typical ICPs tend to have a lower xylene cold soluble (XCS) content determined according to ISO 16152 2005 standard as well as higher flexural modulus determined according to ISO 178:2010 standard compared to reactor-TPOs and soft-TPOs.

Suitable heterophasic propylene copolymers include reactor TPOs and soft TPOs produced with LyondellBasell's Catalloy process technology, which are commercially available under the trade names of Adflex^{®}, Adsyl^{®}, Clyrell^{®}, Hifax^{®}, Hiflex^{®}, and Softell^{®}, such as Hifax^{®} CA 10A, Hifax^{®} CA 12A, and Hifax^{®} CA 60 A, and Hifax CA 212 A. Further suitable heterophasic propylene copolymers are commercially available under the trade name of Borsoft^{®} (from Borealis Polymers), such as Borsoft^{®} SD233 CF.

Suitable polyvinylchloride resins for use as the at least one polymer in the polymeric layer of the roofing membrane include ones having a K-value determined by using the method as described in ISO 1628-2-1998 standard in the range of 50 - 85, preferably 65 - 75. The K-value is a measure of the polymerization grade of the PVC-resin, and it is determined from the viscosity values of the PVC homopolymer as virgin resin, dissolved in cyclohexanone at 30° C.

In case the polymeric layer of the roofing membrane comprises polyvinylchloride as the at least one polymer, it may further be preferred to include at least one plasticizer for the polyvinylchloride resin.

Suitable compounds for use as at least one plasticizer for the polyvinylchloride resin include, but are not restricted to, for example, linear or branched phthalates such as di-isononyl phthalate (DINP), di-nonyl phthalate (L9P), diallyl phthalate (DAP), di-2-ethylhexyl-phthalate (DEHP), dioctyl phthalate (DOP), diisodecyl phthalate (DIDP), and mixed linear phthalates (911P). Other suitable plasticizers include phthalate-free plasticizers, such as trimellitate plasticizers, adipic polyesters, and biochemical plasticizers. Examples of biochemical plasticizers include epoxidized vegetable oils, for example, epoxidized soybean oil and epoxidized linseed oil and acetylated waxes and oils derived from plants, for example, acetylated castor wax and acetylated castor oil.

In one further embodiment, the self-adhering article is a waterproofing membrane, wherein the polymeric layer preferably has a width of at least 0.5 m, more preferably at least 0.75 m, even more preferably at least 1 m, particularly of 0.75 - 5 m, preferably 1 - 3.5 m, more preferably 1 - 2.5 m and/or wherein the polymeric layer preferably has a thickness of at least 0.5 mm, more preferably at least 0.75 mm, even more preferably at least 1 mm, particularly 0.5 - 5 mm, preferably 0.75 - 3.5 mm, more preferably 1 - 3 mm.

In one embodiment, the polymeric layer of the waterproofing membrane comprises the least one polymer selected from polyethylene (PE), ethylene copolymers, ethylene-vinyl acetate copolymer (EVA), and ketone ethylene esters (KEE).

Suitable ethylene copolymers for use as the at least one polymer in the polymeric layer of the waterproofing membrane include, for example, random and block copolymers of ethylene and one or more C₃-C₂₀ α-olefin monomers, in particular one or more of propylene, 1-butene, 1-pentene, 1-hexene, 1-heptene, 1-octene, 1-decene, 1-dodecene, and 1-hexadodecene, preferably comprising at least 60 wt.-%, more preferably at least 65 wt.-% of ethylene-derived units, based on the weight of the copolymer.

Suitable ethylene-α-olefin block copolymers include ethylene-based olefin block copolymers (OBC), which are commercially available, for example, under the trade name of Infuse^{®}, such as Infuse^{®} 9100, Infuse^{®} 9107, Infuse^{®} 9500, Infuse^{®} 9507, and Infuse^{®} 9530 (all from Dow Chemical Company).

Suitable ethylene vinyl acetate copolymers for use as the at least one polymer in the polymeric layer of the waterproofing membrane include ethylene vinyl acetate bipolymers and terpolymers, such as ethylene vinyl acetate carbon monoxide terpolymers.

Suitable ethylene vinyl acetate bipolymers and terpolymers are commercially available, for example, under the trade name of Escorene^{®} (from Exxon Mobil), under the trade name of Primeva^{®} (from Repsol Quimica S.A.), under the trade name of Evatane^{®} (from Arkema Functional Polyolefins), under the trade name of Greenflex^{®} (from Eni versalis S.p.A.), under the trade name of Levapren^{®} (from Arlanxeo GmbH), and under the trade name of Elvaloy^{®} (from Dow).

In one embodiment, the self-adhesive article further comprises a release liner arranged on the outward facing surface of the adhesive layer opposite to the side of the substrate layer.

Such release liner may be used to prevent premature unwanted adhesion and to protect the adhesive layer from moisture, fouling, and other environmental factors. In case the self-adhesive article is provided in form of rolls, the release liner may enable ease of unwind without sticking of the adhesive to the back side of the article. The release liner may be sliced into multiple sections to allow portioned detachment of the liner from the adhesive layer.

Suitable materials for the release liner include Kraft paper, polyethylene coated paper, silicone coated paper as well as polymeric films, for example, polyethylene, polypropylene, and polyester films coated with polymeric release agents selected from silicone, silicone urea, urethanes, waxes, and long chain alkyl acrylate release agents.

In one embodiment, the self-adhesive article comprises a first adhesive layer of the at least partially cured acrylic pressure sensitive adhesive and coated on a first major surface of the substrate layer and a second adhesive layer coated on a second major surface of the substrate layer, wherein the second adhesive layer is preferably composed of the at least partially cured acrylic pressure sensitive.

The preferences given above for the radiation curable adhesive composition, particularly to the at least one acrylic compound **A,** the at least one free photoinitiator **PI,** the at least one synergist **S,** the at least one vinyl compound **VC,** the at least one crosslinking agent **CA,** the at least one reaction product **RP,** the at least one compound **P,** the at least one hardener **H,** and to the at least one tackifying resin **TR** apply equally to all other aspects of the present invention unless specified otherwise.

Another aspect of the present invention is a method for producing a self-adhesive article of the present invention, the method comprising steps of:
I) Applying a radiation curable adhesive composition as discussed above to a surface of a first or a second substrate to form an adhesive film and
II) Subjecting the adhesive film to radiation having a wavelength in the range of 375 - 500 nm , preferably 385 - 485 nm, more preferably 385 - 475 nm, even more preferably 400 - 475 nm, still more preferably 420 - 475 nm, most preferably 420 - 470 nm to effect at least partial curing of the radiation curable adhesive composition.

In the first step of method, a radiation curable adhesive composition is applied to a surface of a first or second substrate to form an adhesive film.

Particularly, several layers of the radiation curable adhesive composition may be applied on top of each other in step I) before the thus obtained adhesive film is subjected to UV-radiation in step II) of the method.

The adhesive composition can be applied to a surface of a substrate to form a continuous or a discontinuous adhesive film using any conventional techniques known to the skilled person, such as by slot die coating, extrusion coating, roller coating, direct gravure coating, offset gravure coating, reverse gravure roll-coating, or by using powder dispersion, spray lamination, screen printing or inkjet printing techniques.

The temperature at which the adhesive composition is applied to the surface of the substrate depends mainly on the embodiment of the adhesive composition.

In one embodiment, the temperature of the radiation curable adhesive composition in step I) of the method is at or below 50 °C, preferably at or below 40 °C, more preferably at or below 35 °C, even more preferably at or below 30 °C.

In the second step of method, the adhesive film is subjected to radiation to effect at least partial curing of the radiation curable adhesive composition.

The term "curing" refers here to chemical reactions comprising forming of bonds resulting, for example, in chain formation and/or extension and/or crosslinking of polymer chains. Step II) of the method is preferably conducted under inert atmosphere to minimize the oxygen inhibition of the radiation induced curing reaction

Particularly, in step II) of the method, the adhesive film is subjected a radiation dosage of 50 - 3000 mJ/cm², preferably 100 - 2000 mJ/cm², more preferably 500 - 1500 mJ/cm².

The radiation curably adhesive composition can be directly applied to form an adhesive film to a surface of a second substrate, such as a carrier/substrate layer of an adhesive article, or to a surface of a first substrate, such as a transfer sheet, which is then used to transfer the adhesive film to the surface of the second substrate.

In a first embodiment, the first substrate is a transfer sheet and the method comprises a further step of laminating the transfer sheet to a surface of the second substrate such that the adhesive film is positioned between the transfer sheet and the second substrate

Furthermore, the step of laminating the transfer sheet to a surface of the second substrate can be conducted after step I) and before or after step II), i.e., the adhesive film may be subjected to the radiation induced curing before and/or after the transfer sheet has been laminated to the surface of the second substrate. In the latter case, the transfer sheet is preferably composed of a material, which is transparent to the radiation used in step II) of the method.

The transfer sheet may then be delaminated from the surface of the second substrate after step II) has been conducted or left to the surface of the second substrate to perform as a release liner.

In a second embodiment, second substrate is a carrier layer of an adhesive article, such an adhesive tape or self-adhesive membrane, and the radiation curably adhesive composition is directly applied to form an adhesive film to a surface of the second substrate.

Following radiation curing step, the transfer sheet, if used in the process, may be removed and a release liner may be applied to cover the outer surface of the at least partially cured adhesive film facing away from the surface of the second substrate.

The release liner may be supplied from a mandrel and removably mated to the surface of the at least partially cured adhesive film through pressure supplied by nip rolls. After application of the release liner, the thus obtained composite article may be wound within a winding step to provide wound rolls of the self-adhesive article.

In one embodiment, the method for producing a self-adhesive article comprises a further step of:
III) Covering an outer surface of the at least partially cured adhesive film facing away from the surface of the second substrate with a release liner.

In one further embodiment, the method for producing a self-adhesive article comprises a further step of:
IV) Winding the composite element obtained in step II) or III) into a roll.

The steps I) to IV) of the method can be conducted in a continuous coating process, where the radiation curable adhesive composition is first coated onto a surface of the first or second substrate using a line-coater. The second substrate or a laminate of the second substrate layer and the first substrate is then fed into a radiation curing station, where the adhesive film is subjected to a desired dosage of radiation, which may be supplied by using one or more lamps, such as LED lamps.

The desired dosage of radiation energy can be supplied to the adhesive film by adjusting the intensity of the radiation and exposure time. The intensity of the radiation can be controlled by adjusting the power supplied to the respective lamps and the distance between the lamps and the surface of the adhesive film. Exposure time can be controlled based on the line speed of the coater, i.e. the speed at which the substrate is passed through the radiation curing station.

In one embodiment, the second substrate is a polymeric layer, preferably comprising at least one polymer selected from polyvinylchloride, polyolefins, halogenated polyolefins, rubbers, and ketone ethylene esters.

In one further embodiment, the self-adhesive article is an adhesive tape or a self-adhesive waterproofing, roofing, gas barrier, VOC barrier, or a façade membrane, a geomembrane, or a roof underlayment.

Another aspect of the present invention is an at least partially cured adhesive obtained by subjecting a mass of the radiation curable adhesive composition as discussed above to a radiation characterized by a wavelength of 375 - 500 nm, preferably 385 - 485 nm, more preferably 385 - 475 nm, even more preferably 400 - 475 nm, still more preferably 420 - 475 nm, most preferably 420 - 470 nm.

A further aspect of the present invention is a method for sealing a structure (5) comprising steps of:
i) Providing a self-adhesive article (1) according to the present invention and
ii) Contacting the outer surface of the adhesive layer (3) facing away from the substrate layer (2) with a surface of the structure (5) and applying sufficient pressure to form an adhesive bond between the substrate layer (2) and the surface of the structure (5).

Still another aspect of the present invention is a waterproofed structure (5) comprising a self-adhering article (1) according to the present invention, wherein at least a portion of one of the major surfaces of the substrate layer (2) is adhered to a surface of the structure (5) via the adhesive layer (3).

The structure (5) can be any above or below ground structure, which is to be sealed against penetration of moisture, water, or harmful gases such as radon or volatile organic compounds (VOC). The structure can be a concrete, fiber concrete, metal, or a plywood substrate, or it may include an insulation board or a cover board and/or an existing membrane.

### Examples

The following materials as presented in Table 1 were used in the Examples.

**Table 1**

| | | |
|---|---|---|
| Acrylic compound **A1** | Ethylhexyl acrylate | Sigma-Aldrich |
| Acrylic compound **A2** | Polyethylhexyl acrylate | Inhouse |
| Vinyl compound **VC** | Acrylic acid | Sigma-Aldrich |
| Photoinitiator **PI1** | Camphorquinone | Sigma-Aldrich |
| Photoinitiator **PI2** | TR-PS-202 | Tronly New Electronic Materials Co.,Ltd. |
| Photoinitiator **PI3** | Genocure^{®} BAPO | RAHN AG, Switzerland |
| Synergist **S1** | Genocure^{®} ITX | RAHN AG, Switzerland |
| Synergist **S2** | Genopol^{®} AB-2 | RAHN AG, Switzerland |
| Synergist **S3** | Esacure^{®} A198 | IGM Resins |

### Preparation of radiation curable adhesive compositions

The exemplary adhesive compositions were prepared according to the following procedure.

The acrylic polymer (A2) was first prepared by polymerizing a reaction mixture comprising 89.9 wt.-% of the ethylhexyl acrylate (A1), 10 wt.-% of acrylic acid (VC), and 0.1 wt.-% of azobisisobutyronitrile (AIBN) as catalyst. The polymerization was conducted at a temperature of 70 °C for 24 hours.

The other constituents of the adhesive composition including the acrylic monomer A1, vinyl compound VC, photoinitiator PI, and the synergist S were then added to the reaction mixture and homogenized by speed mixing for approximately 5 minutes at 2500 rpm. During and after the addition of the photoinitiator **PI** and the synergist **S** the mixtures were protected from direct sunlight and intensive irradiation to prevent premature curing of the adhesive composition.

The constituents and their amounts in the adhesive compositions are shown in Table 2.

### Adhesive properties

Self-adhesive articles comprising a carrier layer and a at least partially cured layer of the tested radiation curable adhesive composition were first prepared as follows.

The adhesive composition was first applied as a film to a surface of a transfer sheet (carrier layer) The adhesive film was then subjected to radiation having a wavelength of 420 - 530 nm (METOLIGHT LED-Tube-BFC) to effect at least partial curing of the radiation curable adhesive composition. The irradiation time was 300 seconds and the distance between radiation source and substrate was approx. 5 cm.

The transfer sheet was laminated to a surface of a membrane sheet such that the adhesive film was positioned between the transfer sheet and the membrane. After the adhesive film had been contacted with the surface of the membrane sheet, the transfer sheet was rolled over using a handheld roller and the self-adhering membrane sheet was stored for 24 hours at normal room temperature before being used in the peel strength measurements.

Narrow strips having dimensions of 25 x 200 mm (width, length) were cut from the self-adhering membrane sheets, the transfer sheet was removed and the strips were laminated to a surface of a substrate having dimensions of 50 x 250 mm (width, length). The thus obtained composite elements were rolled over six times with a 5 kg hand held roller and stored for 24 hours at normal room temperature.

Two different membranes and two different substrates were used in the peel strength measurements:
1^{st} membrane: EPDM roofing membrane Hertalan^{®} (from Carlisle CM Europe)
2^{nd} membrane: PVC roofing membrane Sarnafil^{®} G410-15 EL L3 (from Sika AG)
1^{st} substrate: Roof board DensDeck Duragard^{®} (from G-P Gypsum)
2^{nd} substrate: Roof insulation board Kingspan^{®} Thermaroof TR27 (from Kingspan)

In the peel measurements, strips of the self-adhering membrane sheet were peeled off from the surface of the substrate at a peeling angle of 90 ° and at a constant cross beam speed of 100 mm/min. The peeling of the strip was continued until a length of approximately 140 mm of the strip was peeled off from the surface of the substrate. The values for peel resistance were calculated as average peel force per width of the sample strip [N/ 50 mm] during peeling over a length of approximately 70 mm thus excluding the first and last quarter of the total peeling length from the calculation.

The average peel resistance values presented in Table 3 have been calculated as an average of 2 measurements conducted with the same sample strip.

**Table 2**

| **Composition [pbw]** | **FT-1** | **FT-2** | **FT-3** | **FT-4** | **FT-5** |
|---|---|---|---|---|---|
| Acrylic compound **A1** | 45.00 | 45.00 | 45.00 | 45.00 | 45.00 |
| Acrylic compound **A2** | 45.00 | 45.00 | 45.00 | 45.00 | 45.00 |
| Vinyl compound **VC** | 10.00 | 10.00 | 10.00 | 10.00 | 10.00 |
| Photoinitiator **PI1** | 0.00 | 0.00 | 0.50 | 1.00 | 0.00 |
| Photoinitiator **PI2** | 0.00 | 0.00 | 0.00 | 0.00 | 0.20 |
| Photoinitiator **PI3** | 1.00 | 1.50 | 0.00 | 0.00 | 0.00 |
| Synergist **S1** | 0.00 | 1.00 | 0.00 | 0.00 | 0.00 |
| Synergist **S2** | 0.00 | 0.00 | 0.00 | 0.00 | 2.00 |
| Synergist **S3** | 0.00 | 0.00 | 1.00 | 2.00 | 0.00 |
| **Total** | 101.00 | 102.50 | 101.50 | 103.00 | 102.20 |

**Table 3**

| | | **Peel strength 90° [N/25 mm]** | |
|---|---|---|---|
| | | **Membrane** | |
| **Self-adhesive article** | **Substrate** | 1st | 2nd |
| FT-1 | 1st | 5 | 4 |
| | 2nd | 5 | 5 |
| FT-2 | 1st | 5 | 3 |
| | 2nd | 7 | 4 |
| FT-3 | 1st | 14 | 14 |
| | 2nd | 16 | 21 |
| FT-4 | 1st | 16 | 20 |
| | 2nd | 18 | 24 |
| FT-5 | 1st | 22 | 12 |
| | 2nd | 28 | 13 |

## Claims

1. A self-adhesive article (1) comprising a substrate layer (2) and an adhesive layer (3) of at least partially cured acrylic pressure sensitive adhesive obtained by subjecting a radiation curable adhesive composition to a radiation **characterized by** a wavelength of 375 - 500 nm, preferably 385 - 475 nm, wherein the radiation curable adhesive composition comprises:
a) At least one acrylic compound **A,**
b) At least one photoinitiator **PI,**
c) Optionally at least one synergist **S** for the photoinitiator **PI,** and
d) Optionally at least one vinyl compound **VC.**

2. The self-adhesive article according to claim 1, wherein the radiation curable adhesive composition has a melting point determined by differential scanning calorimetry (DSC) according to ISO 11357-3 standard using a heating rate of 2 °C/min of at or below 45 °C, preferably at or below 35 °C.

3. The self-adhesive article according to any one of previous claims, wherein the acrylic compound **A** comprises at least one acrylic monomer **A1** of formula (I): 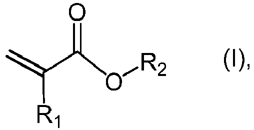
where R₁ is hydrogen or a hydrocarbyl moiety; and
R₂ is a hydrocarbyl moiety, optionally containing one or more heteroatoms.

4. The self-adhesive article according to claim 3, wherein R₁ is hydrogen or methyl and R₂ is a hydrocarbyl moiety selected from the group consisting of alkyl, cycloalkyl, substituted cycloalkyl, alkenyl, cycloalkenyl, substituted cycloalkenyl, aryl, substituted aryl, aralkyl, alkaryl, allyl, and alkynyl groups, optionally containing one or more heteroatoms, preferably selected from the group consisting of nitrogen, oxygen, boron, silicon, sulfur, and phosphorus atoms.

5. The self-adhesive article according to any one of previous claims, wherein the acrylic compound **A** comprises at least one acrylic polymer **A2,** preferably having has a glass transition temperature (T_{g}), determined by dynamical mechanical analysis (DMA) as the peak of the measured loss modulus (G") curve using an applied frequency of 1 Hz and a strain level of 0.1 %, of at or below 80 °C, preferably at or below 60 °C and/or an average molecular weight (Mₙ) of 20000 - 3000000 g/mol, preferably 30000 - 2500000 g/mol.

6. The self-adhesive article according to any one of previous claims, wherein the sum of the at least one acrylic monomer **A1** and the at least one acrylic polymer **A2** makes up at least 50 wt.-%, preferably at least 65 wt.-%, more preferably at least 75 wt.-% of the total weight of the radiation curable adhesive composition.

7. The self-adhesive article according to any one of previous claims, wherein the at least one photoinitiator **PI** can be activated with irradiation having a wavelength of 375 - 500 nm, preferably 385 - 485 nm to initiate the curing reactions of the radiation curable adhesive composition.

8. The self-adhesive article according to any one of previous claims, wherein the radiation curable adhesive composition comprises 0.05 - 10 wt.-%, preferably 0.05 - 5 wt.-% of the at least one photoinitiator **PI.**

9. The self-adhesive article according to any one of previous claims, wherein the radiation curable adhesive composition comprises at least one synergist **S,** preferably a nitrogen containing synergist, preferably selected from 2-isopropyl thioxanthone, 1,3-propanediol, 2-ethyl-2-(hydroxymethyl)-, polymer with oxirane, 4-(dimethylamino)benzoate, DMAEMA, DEABP, benzoic acid, and 4-(dimethylamino)-, 1,1'-[(methylimino)di-2,1-ethanediyl] ester.

10. The self-adhesive article according to any one of previous claims, wherein the radiation curable adhesive composition comprises 0.05 - 10 wt.-%, preferably 0.5 - 7.5 wt.-% of the at least one synergist **S.**

11. The self-adhesive article according to any one of previous claims, wherein the radiation curable adhesive composition comprises at least one vinyl compound **VC,** preferably selected from ethylenically unsaturated hydrocarbons with functional groups, vinyl esters, vinyl halides, vinylidene halides, nitriles of ethylenically unsaturated hydrocarbons, phosphoric acid esters, and zinc salts of (meth)acrylic acid.

12. The self-adhesive article according to any one of previous claims, wherein the radiation curable adhesive composition comprises 0 - 30 wt.-%, preferably 1.0 - 25 wt.-% of the at least one vinyl compound **VC.**

13. The self-adhesive article according to any one of previous claims, wherein the self-adhesive article is an adhesive tape or a self-adhesive waterproofing, roofing, gas barrier, VOC barrier, or a façade membrane, a geomembrane, or a roof underlayment.

14. A method for producing a self-adhesive article according to any one of previous claims, the method comprising steps of:
I) Applying a radiation curable adhesive composition as defined in any one of previous claims to a surface of a first or a second substrate to form an adhesive film and
II) Subjecting the adhesive film to radiation having a wavelength in the range of 375 - 500 nm, preferably 385 - 475 nm, more preferably 420 - 475 nm to effect at least partial curing of the radiation curable adhesive composition,

15. The method according to claim 14, wherein the temperature of the radiation curable adhesive composition in step I) is at or below 50 °C, preferably at or below 40 °C.

16. An at least partially cured adhesive obtained by subjecting a mass of the radiation curable adhesive composition as defined in any one of claims 1-13 to a radiation **characterized by** a wavelength of 375 - 500 nm, preferably 385 - 475 nm.

17. A method for sealing a structure (5) comprising steps of:
i) Providing a self-adhesive article (1) according to any one of claims 1-13,
ii) Contacting the outer surface of the adhesive layer (3) facing away from the substrate layer (2) with a surface of the structure (5) and applying sufficient pressure to form an adhesive bond between the substrate layer (2) and the surface of the structure (5).
